# EUROPÄISCHE PATENTSCHRIFT

(11) **EP 3 087 017 B1**
(45) Veröffentlichungstag und Bekanntmachung des Hinweises auf die Patenterteilung: **01.11.2017**
(21) Anmeldenummer: 14824841.2
(22) Anmeldetag: 22.12.2014
(51) Int. Cl.: B65G 17/16, A22C 11/00, A01G 9/14, B65B 23/02, B65G 17/06, B65G 17/12, B65G 17/36, B65G 49/05, E04D 13/064, B65G 47/24

(54) **TRANSPORTELEMENT ZUR AUFNAHME UND TRANSPORT VON EIERN UND KOCH-, PASTEURISIER- ODER KÜHLGERÄT**
TRANSPORTING ELEMENT FOR ACCOMMODATING AND TRANSPORTING EGGS, AND COOKING APPLIANCE, PASTEURIZER OR COOLING UNIT
ÉLÉMENT DE TRANSPORT SERVANT À LOGER ET À TRANSPORTER DES OEUFS ET APPAREIL DE CUISSON, DE PASTEURISATION OU DE RÉFRIGÉRATION

(30) Priorität: 23.12.2013 DE 102013114809
(43) Veröffentlichungstag der Anmeldung: 02.11.2016
(73) Patentinhaber: Bergmeier, Gerd, 32120 Hiddenhausen (DE)
(72) Erfinder: Bergmeier, Gerd, 32120 Hiddenhausen (DE)
(74) Vertreter: Kleine, Hubertus
(86) Internationale Anmeldenummer: PCT/EP2014/079006
(87) Internationale Veröffentlichungsnummer: WO 2015/097156

(56) Entgegenhaltungen:
- DE-A1- 10 010 629
- DE-T2- 60 009 458
- DE-T2- 69 836 505
- US-A- 1 445 277
- US-B1- 6 419 968

## Beschreibung

Die vorliegende Erfindung betrifft ein Transportelement zur Aufnahme und zum Transport von Eiern gemäß dem Oberbegriff des Anspruchs 1 sowie ein Koch-, Pasteurisier- oder Kühlgerät.

Gattungsgemäße Transportelemente werden insbesondere in Koch-, Pasteurisier- oder Kühlgeräten zum Befördern von Eiern entlang einer Beförderungsstrecke durch das Koch-, Pasteurisier- oder Kühlgerät eingesetzt. Die Beförderungsstrecke innerhalb des Pasteurisier- oder Kühlgerätes ist dabei üblicher Weise so ausgelegt, dass aufgrund der notwendigen Behandlungsdauer, beispielsweise beim Pasteurisieren mit auf etwa 60°C erhitztem Wasser, mit dem die Eier besprüht werden, die Förderstrecke mäanderförmig ausgelegt ist, um den horizontal zurückgelegten Förderweg möglichst kurz zu halten und das Koch-, Pasteurisier- oder Kühlgerät möglichst kompakt gestalten zu können.

Ein Pasteurisierverfahren sowie ein zur Ausführung desselben ausgelegtes Pasteurisiergerät ist beispielsweise in der DE 10 2004 012 348 A1 beschrieben. Bei dem dort beschriebenen Verfahren und der dort beschriebenen Pasteurisiervorrichtung werden die zu pasteurisierenden Eier in Reihen nebeneinander liegend längs der Förderstrecke transportiert. Dazu werden üblicher Weise Transportelemente eingesetzt, die die Eier in ihrer Position in oder auf dem Transportelement fixieren.

Wichtig bei dieser Fixierung ist, dass die von etwaigen Fixierelementen verdeckte Eierschalenfläche möglichst klein gehalten wird, um eine möglichst großflächige Besprühung der Eier mit dem erhitzten Wasser erreichen zu können.

Aufgabe der vorliegenden Erfindung ist es, ein Transportelement zur Aufnahme und zum Transport solcher kugel-, zylinder- oder eiförmigen Gegenstände, insbesondere Lebensmitteln, wie insbesondere Eier, entlang einer Beförderungsstrecke bereitzustellen, mit dem insbesondere die benetzbare Außenfläche der kugel-, zylinder- oder eiförmigen Gegenstände weiter erhöht werden kann.

Diese Aufgabe wird durch ein Transportelement zur Aufnahme und zum Transport von kugel-, zylinder- oder eiförmigen Gegenständen mit den Merkmalen des Anspruchs 1 gelöst.

Das erfindungsgemäße Transportelement ist als rinnenförmiger Körper ausgebildet, mit einem im Querschnitt teilkreisförmig gebogenen, einen Winkel von mindestens 180° einschließenden Aufnahmeraum zur Aufnahme der kugel-, zylinder- oder eiförmigen Gegenstände, wobei die Lagerstellen, in denen die kugel-, zylinder- oder eiförmigen Gegenstände aufnehmbar sind, als schlitzförmige Ausnehmungen in teilkreisförmig gebogenem Bereich des rinnenförmigen Körpers ausgebildet sind. Die schlitzförmige Ausnehmungen erstrecken sich dabei parallel zueinander und quer zur Längserstreckung des rinnenförmigen Körpers beidseits bis zu einer jeweiligen Längsrand bildenden Längsstegen.

Mit einem derart ausgebildeten Transelement ist es ermöglicht, die Eier beim Durchfahren durch die Beförderungsstrecke vollflächig behandeln zu können, insbesondere im Falle des Einsatzes in einem Pasteurisiergerät vollflächig mit auf etwa 60°C erhitztem Wasser zu besprühen, da es mit diesem Transportelement ermöglicht ist, auf der mäanderförmig gestalteten Beförderungsstrecke das Transportelement um 180° aus einer ersten Position, beispielsweise in einem Anstiegsbereich der Beförderungsstrecke, in eine zweite Position in einem Abstiegsbereich der Beförderungsstrecke zu verschwenken, so dass ein lose in einer schlitzförmigen Ausnehmung des Transportelements einliegendes Ei entlang des Schlitzes mit der Schwenkbewegung einhergehend innerhalb des Schlitzes seine Position verändert. Dadurch ändert sich auch der Auflagebereich des Eis auf dem Transportelement dergestalt, dass beim Durchlauf des Eies entlang der Beförderungsstrecke eine Benetzung der gesamten Oberfläche des Eies mit erhitztem Wasser ermöglicht ist.

Vorteilhafte Ausführungsvarianten der Erfindung sind Gegenstand der Unteransprüche.

Gemäß einer vorteilhaften Ausführungsvariante erstrecken sich die Ausnehmungen über einen Winkelbereich von 150° bis 190°, so dass das Ei stets teilweise in die schlitzförmige Ausnehmung eintaucht und so in der zugeordneten Lagerstelle auch während oder nach dem Verschwenken des Transportelements verbleibt.

Bevorzugt ist mindestens einer der den Längsrand bildenden Längsstege des rinnenförmigen Körpers zumindest teilweise nicht gekrümmt, sondern eben ausgebildet.

Zur Erhöhung der Stabilität des Transportelements in dessen Längsrichtung ist besonders bevorzugt mindestens eine der Längsstege entlang seiner Außenlängskante von dem Aufnahmeraum weg umgebogen ausgebildet.

Gemäß einer weiteren vorteilhaften Ausführungsvariante der Erfindung sind an den Stirnseiten des Transportelements bevorzugt Montageelemente zur verschwenkbaren Lagerung des Transportelements um eine zur Längsachse des Transportelements parallele Schwenkachse vorgesehen. Mithilfe dieser Montageelemente lassen sich die Transportelemente in einfacher Weise an dafür vorgesehenen Stegen befestigen, die von einem Antriebsmittel, wie beispielsweise einer Kette, entlang der Förderstrecke bewegbar sind und so die Transportelemente durch die Förderstrecke mitnehmen.

Zur einfacheren Handhabung, insbesondere Montage, aber auch Reinigung der Transportelemente sind diese besonders bevorzugt einteilig und insbesondere aus einem Edelstahlblech angefertigt ausgebildet.

Das erfindungsgemäße Koch-, Pasteurisier- oder Kühlgerät, das einen Koch-, Pasteurisier- oder Kühlraum aufweist, in dem eine Förderstrecke angeordnet ist, entlang der zu befördernde Eier, insgesamt horizontal fortschreitend, dabei aber mäanderförmig auf und ab auf in der Förderstrecke montierten Transportelementen transportierbar sind, zeichnet sich dadurch aus, dass die Transportelemente wie oben beschrieben ausgebildet sind und um eine quer zur Förderrichtung ausgerichtete Schwenkachse um etwa 180° schwenkbar gelagert sind.

Nachfolgend wird ein Ausführungsbeispiel eines erfindungsgemäßen Transportelements anhand der beiliegenden Zeichnungen näher erläutert.

Es zeigen:
- Figur 1: eine perspektivische Ansicht einer Ausführungsvariante eines erfindungsgemäßen Transportelements,
- Figur 2: eine Seitenansicht auf das Transportelement aus Figur 1 in einer Schwenkposition,
- Figur 3: eine Seitenansicht des Transportelements mit Darstellung der schlitzförmigen Ausnehmungen und Querstege,
- Figur 4: eine Querschnittsansicht des Transportelements durch einen mit IV in Figur 3 markierten Schnitt und
- Figur 5: eine Ansicht auf eine der Stirnseite des in Figur 3 gezeigten Transportelements.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Transportelement, Querstege, Längsstege, Montageelement, Ausnehmungen und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

Desweiteren wird in der nachfolgenden Figurenbeschreibung des Transportelements sowie des Koch-, Pasteurisier- oder Kühlgerätes die Erfindung überwiegend am Beispiel des Einsatzes eines solchen Transportelements in einem Pasteurisiergerät erläutert. Dies ist jedoch keinesfalls als Beschränkung auf einen solchen Einsatz zu verstehen.

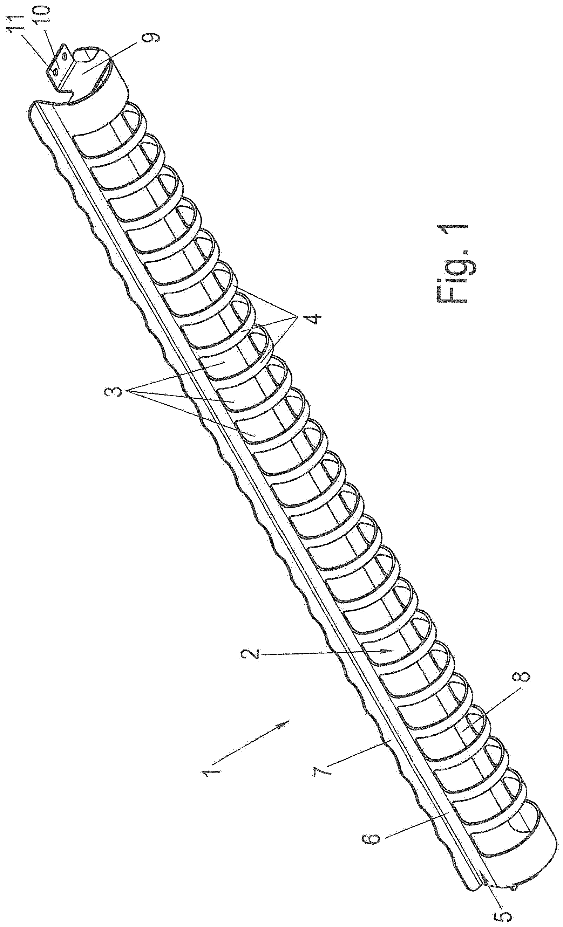

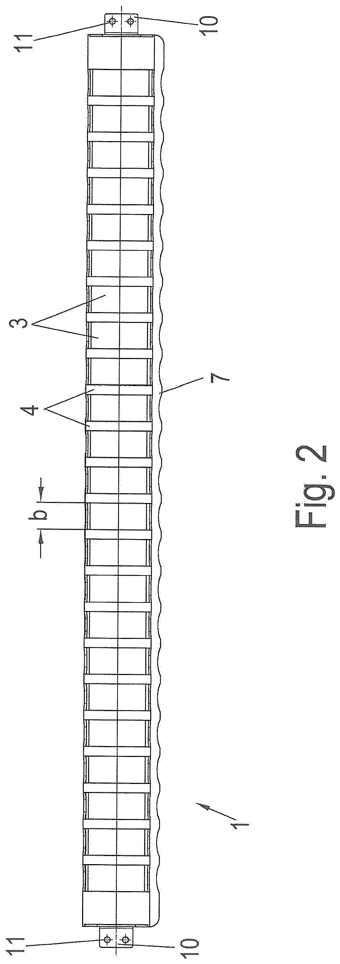

In den Figuren 1 bis 5 ist mit dem Bezugszeichen insgesamt eine Ausführungsvariante eines als rinnenförmiger Körper 1 ausgebildetes erfindungsgemäßen Transportelements bezeichnet.

Wie besonders gut in Figur 1 erkennbar ist, bildet ein teilkreisförmig gebogener Boden dieses rinnenförmigen Körpers 1 einen Aufnahmeraum zur Aufnahme der Eier, der von dem Boden in einen Winkel von mindestens 180° umschlossen ist.

Dieser Boden ist mit schlitzförmigen Ausnehmungen 3 versehen, die als Lagerstellen für die Eier dienen. Die schlitzförmigen Ausnehmungen 3 sind dabei parallel zu einander ausgerichtet, so dass eine Vielzahl von Eiern in Längserstreckung des Transportelements nebeneinander lagerbar bzw. aufnehmbar sind.

Die schlitzförmigen Ausnehmungen 3 erstrecken sind dabei quer zur Längserstreckung des rinnenförmigen Körpers 1 beidseits bis zu Längsstegen 5, 8, die den jeweiligen Längsrand des rinnenförmigen Körpers 1 bilden.

Legt man nun ein Ei in eine solche schlitzförmige Ausnehmung 3 hinein, so kann das Transportelement in einem Winkelbereich von etwa 180° um seine Längsachse verschwenkt werden, ohne dass das kugel- oder eiförmige Lebensmittel aus dem offenen Raum 2 herauszufallen droht. Ein Aneinanderstoßen von mehreren nebeneinander liegenden Eiern ist durch ein teilweises Einliegen im jeweiligen Schlitz 3 unterbunden. Quer zur Längserstreckung des rinnenförmigen Körpers 1 können sich die kugel- oder eiförmigen Lebensmittel bei einer Verschwenkung des Transportelements längs der schlitzförmigen Ausnehmung 3 bewegen.

Die Breite b jedes dieser schlitzförmigen Ausnehmungen 3 ist dabei dem Durchmesser des Eis entsprechend ausgebildet. Die Breite b der schlitzförmigen Ausnehmung 3 ist dabei so bemessen, dass diese geringer ist als der kleinere Durchmesser des Eies ist, so dass das Ei nicht durch die schlitzförmige Ausnehmung 3 hindurch fallen kann.

Neben der Fixierung des als in Längserstreckung des Transportelements durch die schlitzförmige Ausnehmung 3 erlaubt diese Ausnehmung 3 zugleich eine Besprühung mit erhitztem Wasser auf einen Großteil der Eierschalenfläche.

Die von entsprechenden Sprühdüsen nicht erreichbare Fläche der Eierschale wird jedoch erreicht, sobald, das jeweilige Transportelement beim Transport entlang der mäanderförmigen Beförderungsstrecke verschwenkt wird, bevorzugt um etwa 180°. Dabei rollt das Ei entlang der schlitzförmigen Ausnehmung 3 von einer einem der Längsstege 5 nahen ersten Lagerposition hinüber zu einer dem anderen, gegenüberliegenden Längssteg 8 nahen zweiten Lagerposition, so dass in dieser Position nunmehr andere Bereiche der Eierschalenfläche durch den rinnenförmigen Körper 1 verdeckt sind. Dadurch können im Laufe der Beförderung entlang der Beförderungsstrecke die Eier vollflächig mit erwärmtem Wasser besprüht werden.

Um eine hinreichende Führung der Eier in den schlitzförmigen Ausnehmungen 3 zu gewährleisten, erstrecken sich die Ausnehmungen 3 bevorzugt über einen Winkelbereich von 150° bis 190°, bevorzugt über einen Winkelbereich von etwa 180°.

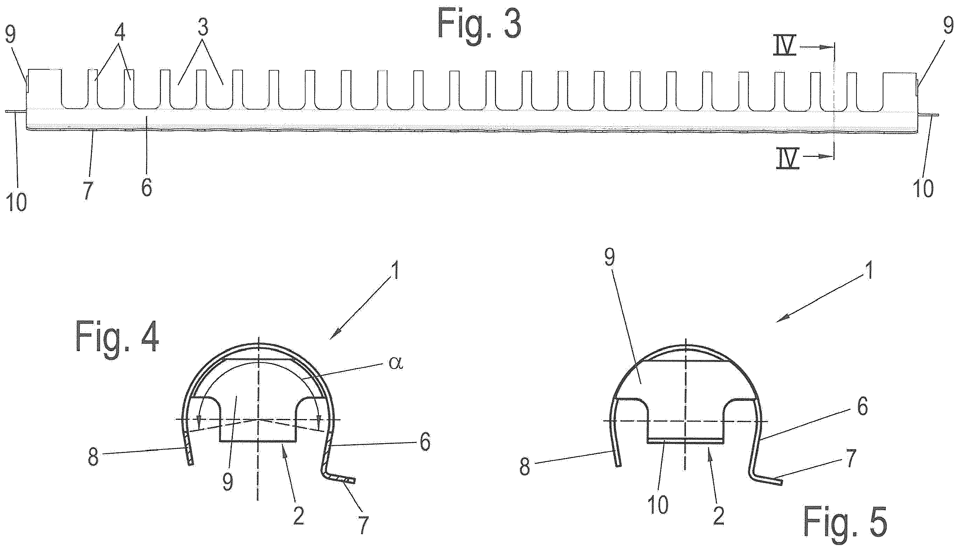

Die den jeweiligen Längsrand bildenden Längsstege 5 sind bevorzugt leicht winklig zueinander und auf einander zu laufend in einem Winkel α ausgerichtet, wie in Figur 4 dargestellt,
Bevorzugt ist zumindest eine Teilfläche 6 eines der Längsstege 5, 8 oder auch beider Längsstege 5, 8 eben ausgebildet.

Zur Stabilitätssteigerung des Transportelements in Längsrichtung ist bevorzugt einer der Längsstege 5, 8 entlang seiner Außenlängskante von dem Aufnahmeraum 2 weg umgebogen mit einer Versteifungskante 7 ausgebildet. Denkbar ist auch, beide einander gegenüber liegenden Längsstege 5, 8 mit solchen umgebogenen Versteifungskanten 7 auszubilden.

Zur Befestigung der Transportelemente an entsprechenden Montagestellen einer Beförderungsvorrichtung, mit der die Transportelemente und damit die Eier entlang einer Beförderungsstrecke, im beschrieben Beispiel durch ein Pasteurisiergerät, befördert werden, sind bevorzugt an den Stirnseiten der Transportelemente entsprechende Montageelemente 9 zur schwenkbaren Lagerung der Transportelemente um eine zur Längsachse der Transportelemente parallele Schwenkachse vorgesehen.

Diese Montageelemente 9 sind dabei bevorzugt als an der Stirnseite des rinnenförmigen Körpers 1 angeschweißte Blechstücke ausgebildet, die parallel zur Längserstreckung des Transportelements sich erstreckende Zungen 10 mit darin vorgesehenen Bohrungen 11 aufweisen, zur Befestigung des Transportelements an entsprechenden Befestigungsstegen (nicht gezeigt) der Beförderungsvorrichtung, beispielsweise durch Verschrauben oder Vernieten.

Mit derart ausgebildeten Transportelementen ist es ermöglicht, eine Vielzahl von Eiern in Reihe nebeneinander liegend entlang einer Förderstrecke in einem Pasteurisierraum eines Pasteurisiergerätes insgesamt horizontal fortschreitend, dabei aber mäanderförmig auf und ab zu transportieren, wobei durch den mäanderförmigen Verlauf der Förderstrecke die Abmaße des Pasteurisierraumes hinreichend begrenzbar sind. Durch die verschwenkbare Lagerung der Transportelemente in einem solchen Pasteurisiergerät ist außerdem gewährleistet, dass die zu transportierenden Eier gleichmäßig und vollflächig behandelt werden können. Im Falle der Pasteurisierung werden die Eier mit auf 60°C erwärmtes Wasser mithilfe von entlang der Förderstrecke im Pasteurisierraum vorgesehenen Sprühdüsen besprüht. Bei einem entsprechenden Kochgerät kann entsprechend heißeres Wasser eingesetzt werden, bei einem Kühlgerät entsprechend kälteres Wasser oder ein anderes Kühlmedium.

### Bezugszeichenliste

- 1: rinnenförmiger Körper
- 2: Aufnahmeraum
- 3: schlitzförmige Ausnehmung
- 4: Quersteg
- 5: Längssteg
- 6: ebener Bereich
- 7: umgebogener Bereich
- 8: Längssteg
- 9: Montageelemente
- 10: Zunge
- 11: Schraubbohrungen

- b: Schlitzbreite

## Patentansprüche

1. Transportelement zur Aufnahme und zum Transport von Eiern entlang einer Beförderungsstrecke, aufweisend mehrere in Längserstreckung nebeneinander angeordnete Lagerstellen zur Lagerung jeweils eines Eis, **dadurch gekennzeichnet, dass** das Transportelement als rinnenförmiger Körper (1) ausgebildet ist, mit einem im Querschnitt teilkreisförmig gebogenen, einen Winkel (α) von mindestens 180° einschließenden Aufnahmeraum (2), wobei die Lagerstellen als schlitzförmige Ausnehmungen (3) im teilkreisförmig gebogenen Bereich des rinnenförmigen Körpers (2) ausgebildet sind, die sich parallel zueinander und quer zur Längserstreckung des rinnenförmigen Körpers (2) beidseits bis zu einen jeweiligen Längsrand bildenden Längsstegen (5) erstrecken.

2. Transportelement nach Anspruch 1, **dadurch gekennzeichnet, dass** die Ausnehmungen (3) sich über einen Winkelbereich von 150° bis 190° erstrecken.

3. Transportelement nach Anspruch 1 oder 2, **dadurch gekennzeichnet, dass** mindestens einer der Längsstege (5) zumindest teilweise eben ausgebildet ist.

4. Transportelement nach einem der vorstehenden Ansprüche, **dadurch gekennzeichnet, dass** mindestens einer der Längsstege (5) entlang seiner Außenlängskante von dem Aufnahmeraum (2) weg umgebogen ausgebildet ist.

5. Transportelement nach einem der vorstehenden Ansprüche, **dadurch gekennzeichnet, dass** an den Stirnseiten Montageelemente (9) zur schwenkbaren Lagerung des Transportelements um eine zur Längsachse des Transportelements parallele Schwenkachse vorgesehen sind.

6. Transportelement nach einem der vorstehenden Ansprüche, **dadurch gekennzeichnet, dass** das Transportelement einteilig ausgebildet ist.

7. Transportelement nach einem der vorstehenden Ansprüche, **dadurch gekennzeichnet, dass** das Transportelement aus einem Edelstahlblech angefertigt ist.

8. Koch-, Pasteurisier- oder Kühlgerät, aufweisend einen Koch-, Pasteurisier- oder Kühlraum, in dem eine Förderstrecke angeordnet ist, entlang der eine zu befördernde Anzahl von Eiern insgesamt horizontal fortschreitend, dabei aber mäanderförmig auf und ab, auf in der Förderstrecke montierten Transportelementen transportierbar ist, **dadurch gekennzeichnet, dass** jedes der Transportelemente gemäß einem oder mehreren der vorstehenden Ansprüche ausgebildet ist und um eine quer zur Förderrichtung ausgerichtete Schwenkachse um etwa 180° schwenkbar gelagert ist.

## Claims

1. A transporting element for accommodating and for transporting eggs along a transport route comprising several bearing points arranged adjacent to each other in the longitudinal extension for bearing one egg each, **characterized in that** the transporting element is formed as a channel-like body (1), having an accommodating space (2) which is curved in the form of part of a circle, as seen in the cross-section, and encloses an angle (α) of at least 180°, wherein the bearing positions are designed in form of slot-shaped apertures (3) in the region of the channel-like body (2) which is curved in the form of part of a circle, said slot-shaped apertures extending in parallel to each other and transversely to the longitudinal extension of the channel-like body (2) on either side up to longitudinal crosspieces (5) forming a respective longitudinal edge.

2. A transporting element according to claim 1, **characterized in that** the apertures (3) extend over an angular range of 150° to 190°.

3. A transporting element according to claim 1 or 2, **characterized in that** at least one of the longitudinal crosspieces (5) is formed at least partly in a flat way.

4. A transporting element according to one of the preceding claims, **characterized in that** at least one of the longitudinal crosspieces (5) is formed to be curved away from the accommodating space (2) along its exterior longitudinal edge.

5. A transporting element according to one of the preceding claims, **characterized in that** mounting elements (9) are provided on the face ends for the pivotable bearing of the transporting element about a pivot axis parallel to the longitudinal axis of the transporting element.

6. A transporting element according to one of the preceding claims, **characterized in that** the transporting element is formed in an integral way.

7. A transporting element according to one of the preceding claims, **characterized in that** the transporting element is made from a stainless-steel sheet.

8. A cooking appliance, pasteurizer or cooling unit, comprising a cooking, pasteurizing or cooling space in which a conveying route is arranged, along which a number of eggs to be conveyed can be transported in its entirety in a horizontally progressing manner, but meandering upwardly and downwardly, on transporting elements mounted in the conveying route, **characterized in that** each of the transporting elements is formed according to one or several of the preceding claims and is mounted to be pivotable about approximately 180° about a pivot axis oriented transversely to the conveying direction.

## Revendications

1. Élément de transport destiné à recevoir et transporter des oeufs le long d'un trajet d'acheminement, présentant plusieurs points de stockage disposés les uns à côté des autres dans le sens de la longueur pour le stockage d'un oeuf dans chacun, **caractérisé en ce que** l'élément de transport est conformé comme un corps en forme de gouttière (1) avec un espace de logement (2) dont la section est courbée en forme de segment de cercle et qui décrit un angle (α) d'au moins 180°, les points de stockage étant conformés comme des évidements (3) en forme de fentes dans la zone courbée en forme de segment de cercle du corps en forme de gouttière (2), qui s'étendent parallèlement les uns aux autres et transversalement par rapport à la longueur du corps en forme de gouttière (2) jusqu'à des barrettes longitudinales (5) formant un bord longitudinal correspondant.

2. Élément de transport selon la revendication 1, **caractérisé en ce que** les évidements (3) s'étendent sur une plage d'angle de 150° à 190°.

3. Élément de transport selon la revendication 1 ou 2, **caractérisé en ce qu'**au moins une des barrettes longitudinales (5) est au moins partiellement plane.

4. Élément de transport selon l'une des revendications précédentes, **caractérisé en ce qu'**au moins une des barrettes longitudinales (5) est recourbée pour s'éloigner de l'espace de logement (2) le long de son bord longitudinal extérieur.

5. Élément de transport selon l'une des revendications précédentes, **caractérisé en ce que** des éléments de montage (9) sont prévus sur les faces d'extrémité pour l'appui pivotant de l'élément de transport autour d'un axe de pivotement parallèle à l'axe longitudinal de l'élément de transport.

6. Élément de transport selon l'une des revendications précédentes, **caractérisé en ce que** l'élément de transport est construit d'une pièce.

7. Élément de transport selon l'une des revendications précédentes, **caractérisé en ce que** l'élément de transport est fait d'une tôle d'acier inoxydable.

8. Appareil de cuisson, de pasteurisation ou de réfrigération présentant un espace de cuisson, de pasteurisation ou de réfrigération dans lequel est disposé un trajet d'acheminement le long duquel un nombre d'oeufs à acheminer peut être transporté ensemble sur des éléments de transport progressant à l'horizontale mais montant et descendant en méandres montés dans le trajet d'acheminement, **caractérisé en ce que** chacun des éléments de transport est conformé selon une ou plusieurs des revendications précédentes et est supporté de façon pivotante à environ 180° autour d'un axe de pivotement orienté transversalement par rapport à la direction d'acheminement.
